(19) Europäisches Patentamt
European Patent Office
Office européen des brevets

(11) **EP 3 191 819 B1**

(12) **EUROPÄISCHE PATENTSCHRIFT**

(45) Veröffentlichungstag und Bekanntmachung des Hinweises auf die Patenterteilung:
**08.12.2021 Patentblatt 2021/49**

(51) Int Cl.:
***G01N 23/202*** *(2006.01)*    ***G01N 23/05*** *(2006.01)*
***G21K 1/16*** *(2006.01)*

(21) Anmeldenummer: **15784552.0**

(22) Anmeldetag: **13.08.2015**

(86) Internationale Anmeldenummer:
**PCT/DE2015/000406**

(87) Internationale Veröffentlichungsnummer:
**WO 2016/037598 (17.03.2016 Gazette 2016/11)**

(54) **ANORDNUNG FÜR POLARISIERTE NEUTRONENSTRAHLEN UND VERFAHREN ZUR POLARISATIONSANALYSE**

ARRANGEMENT FOR POLARISED NEUTRON BEAMS AND METHOD FOR POLARISATION ANALYSIS

ENSEMBLE DE FAISCEAUX DE NEUTRONS POLARISÉS ET PROCÉDÉ D'ANALYSE DE LA POLARISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2014 DE 102014013082**

(43) Veröffentlichungstag der Anmeldung:
**19.07.2017 Patentblatt 2017/29**

(73) Patentinhaber: **Forschungszentrum Jülich GmbH 52425 Jülich (DE)**

(72) Erfinder: **IOFFE, Alexander 53773 Hennef (DE)**

(56) Entgegenhaltungen:
**EP-A1- 2 180 484**    **DE-A1-102006 024 584**
**DE-C1- 19 936 898**    **US-A1- 2005 157 831**

**Beschreibung**

Die Erfindung bezieht sich auf eine Anordnung für polarisierte Neutronenstrahlen und ein Verfahren zur Polarisationsanalyse.

Stand der Technik

Bei der Streuung polarisierter Neutronen (engl. Scattering of Polarized Neutrons) werden Proben eines Stoffes mit polarisierten Neutronen beschossen, welche einen Eigen-Drehimpuls (Spin) besitzen. Mit dieser Methode können insbesondere die magnetischen Eigenschaften einer Probe untersucht werden.

Ein polarisierter Neutronenstrahl durchläuft nach dem Stand der Technik zum Zwecke der Polarisation ein $^3$He Neutronenspin-Filter oder einen magnetisierten Superspiegel und gelangt danach in die Probe. Die Neutronen werden dann an der Probe gestreut und treten nach dem Streuprozess in einem breiten Bereich der Winkel $\theta$ auf. Mit Q wird dabei die Impulsübertragung bezeichnet, mit $Q \sim \sin(\theta)/\lambda$. $\lambda$ bezeichnet dabei bekanntermaßen die Neutronenwellenlänge. Nach dem Streuprozess durchlaufen die Neutronen eine Vakuumröhre und können anschließend von einem oder einer Vielzahl an Detektoren oder einem ortauflösenden Detektor detektiert werden. In Abhängigkeit von den magnetischen Eigenschaften der Probe, wird der Neutronenspin also aus seiner Polarisationsrichtung ausgelenkt. Um diese Abweichung zu bestimmen, werden weitere $^3$He Neutronenspin-Filter oder magnetisierte Superspiegel im gestreuten Strahl hinter der Probe installiert. Dabei können eine Vielzahl von $^3$He Neutronenspin-Filter vorhanden sein, da der Winkelbereich groß ist.

Eine erhöhte Neutronenintensität befindet sich in Winkelbereichen, die der nuklearen und magnetischen Streuung entsprechen.

Somit bietet polarisierte Neutronenstreuung bzw. -Strahlung hervorragende Möglichkeiten für das detaillierte Verständnis der zugrundeliegenden Mechanismen beispielweise von neuartigen Supraleitern, molekularen Magneten und von magnetischen Nanostrukturen.

Die Polarisationsanalyse erlaubt bei Experimenten zur Neutronendiffraktion die Separierung der schwachen magnetischen Streuung von der verhältnismäßig starken nuklearen Streuung, bzw. die Separierung der schwachen kohärenten Streuung von der starken inkohärenten Untergrundstreuung, wie sie z. B. bei Wasserstoff enthaltenden biologischen Proben oder biologischen Proben in wässrigen Puffern entsteht.

Die Polarisationsanalyse ist daher eine unverzichtbare und grundlegende Methode in der Neutronenreflektometrie sowie in der Neutronendiffraktion, in der Kleinwinkelneutronenstreuung (engl. Small Angle Neutron Scattering, kurz SANS) sowie in der Neutronenspektrometrie.

Eine besonders beliebte und einfache Methode der Neutronenpolarisation ist die Anwendung von polarisierenden Superspiegeln. Hier gibt es nachteilig allerdings eine Reihe von Einschränkungen und wichtige Limitierungen. Diese betreffen insbesondere die Time-of-Flight (engl. kurz TOF) Instrumente, die gepulste Neutronenstrahlen benutzen, welche durch Spallationsquellen oder durch den Einsatz von mechanischen Choppern an einer Reaktorquelle erzeugt werden. In diesem Fall beträgt der dynamische Bereich des verwendeten Neutronenwellenlängenbandes einen Faktor 10, der in der Regel durch die Verwendung von kurzen Neutronenwellenlängen erzielt wird. Für solche Neutronen ist der kritische Winkel der Spiegelbeschichtung (Totalreflexion) jedoch ziemlich klein. Darüber hinaus verschlechtert sich die Leistung der polarisierten Optik bei Proben mit einer Größe von mehr als einem Millimeter, was von wesentlicher Bedeutung, z. B. für die Diffraktion und die SANS, ist.

Eine Alternative hierzu ist die Verwendung von Neutronenspin-Filtern (NSF), die auf polarisiertem $^3$He Gas basieren. Der Absorptionsquerschnitt hängt stark von der gegenseitigen Ausrichtung der Spins von Neutronen und $^3$He-Kernen ab. Polarisiertes $^3$He absorbiert aus einem transmittierten unpolarisierten Neutronenstrahl alle "falschen Komponenten" heraus, so dass ein polarisierter Neutronenstrahl mit einer einzigen Spin-Orientierung übrig bleibt und das Filter verlässt. Dabei werden nur diejenigen Neutronen, deren Spins antiparallel zu den $^3$He-Kernspins ausgerichtet sind, von polarisierten $^3$He-Kernen mit hoher Wahrscheinlichkeit absorbiert. Man spricht daher von einem $^3$He Neutronenspin-Filter, da dieser eine Spin-Ausrichtung aus dem Strahl herausfiltert. Nach dem Passieren einer mit polarisiertem $^3$He gefüllten Zelle beinhaltet der Neutronenstrahl idealerweise nur noch Neutronen mit einer Spin-Ausrichtung und ist damit polarisiert.

Dabei wird die Flugrichtung der Neutronen und damit verbunden die Winkelinformation nicht gestört, wie dies z. B. per Definition an den polarisierenden Superspiegeln erfolgt. Gleichzeitig kann bei der Analyse sehr einfach ein großer Raumwinkel der von der Probe gestreuten Neutronen abgedeckt werden, indem die $^3$He-Zellen bzw. Filter relativ nah an der Probe platziert werden.

Wegen dieser Vorteile verfügen praktisch alle führenden Neutronenstreuzentren der Welt, wie das ILL in Frankreich, das FRM II in Deutschland, das SNS in den USA, das ISIS in England, das NIST in den USA und das J-PARC in Japan über die Ausrüstung für die Polarisation von $^3$He und über $^3$He-Neutronenspin-Filter für entsprechende Experimente.

Nachteilig wird durch die geläufigen ³He Neutronenspin-Filter als Polarisatoren ein polarisierter Neutronenstrahl erzeugt, bei dem die Transmission des Filters für nur eine ausgewählte Wellenlänge optimiert ist und für andere Wellenlängen schnell abfällt. Jedoch sind für viele Experimente, insbesondere für Neutronenstreuexperimente an gepulsten Neutronenquellen, Messungen an Proben über eine große Wellenlängenbandbreite mit effektiv polarisierten Neutronen hinweg notwendig. So besteht ein großer Vorteil der Flugzeittechnik (engl. Time-of-Flight, kurz TOF) in der Möglichkeit, das Streusignal über einen breiten Bereich der Impulsübertragung $Q \sim \lambda^{-1}$ bei einem festen Instrumentenaufbau ($\theta$=const) zu messen. DE 10 2006 024584 offenbart eine Anordnung für polarisierte Neutronenstrahlen. Solche Anordnungen sind auch aus den Dokumenten EP 2 180 484, US 2005/157831, DE 199 36 898 bekannt.

## Aufgabe der Erfindung

Aufgabe der Erfindung ist es, eine Anordnung für nicht monochromatische, polarisierte Neutronenstrahlen bereit zu stellen, wobei diese mindestens ein ³He Neutronenspin-Filter für gepulste Neutronenstrahlen umfasst. Mit der Anordnung sollen einerseits Neutronen mit unterschiedlicher Wellenlänge effektiv polarisiert und andererseits die an der Probe gestreuten Neutronenstrahlen effektiv analysiert werden können. Eine weitere Aufgabe der Erfindung ist es, ein Verfahren zur Polarisationsanalyse anzugeben bei dem polarisierte Neutronenstrahlen genutzt werden.

## Lösung der Aufgabe

Die Aufgabe wird gelöst nach der Anordnung nach Patentanspruch 1 und dem Verfahren gemäß dem Nebenanspruch. Vorteilhafte Ausgestaltungen hierzu ergeben sich jeweils aus den hierauf rückbezogenen Patentansprüchen.

## Beschreibung der Erfindung

Im Rahmen der Erfindung wurde erkannt, dass die festen Parameter eines ³He Neutronenspin-Filters einen optimalen Betrieb des ³He Neutronenspin-Filters über einen breiten Wellenlängenbereich faktisch nicht zulassen.

Um dennoch effektiv polarisierte Neutronen verschiedener Wellenlänge mit nur einer einzigen Anordnung zu erzeugen bzw. zu analysieren, wurden im Rahmen der Erfindung die nachfolgenden Überlegungen vorgenommen.

Die Polarisation $P_n$ und die Transmission $T_n$ des Neutronenstrahls werden nach der Ausbreitung durch ein ³He Neutronenspin-Filter grundsätzlich durch die beiden Formeln (1) beschrieben:

$$P_n = \tanh[O(\lambda, l_{cell}) \cdot P_{He}], \qquad T_n = T_0 \cosh[O(\lambda, l_{cell}) \cdot P_{He}], \qquad (1)$$

Sie sind die Funktionen für die Opazitäten $O^{\pm}$ für nach oben und nach unten weisende Spin-Zustände, die wiederum von der Polarisation $P_{He}$ und dem Druck p des ³He-Gases abhängt, das in eine Glaszelle mit der Länge $l_{cell}$ gefüllt wurde:

$$O(\lambda) = p \left[^3He\right]_{cell} \sigma_0(\lambda), \qquad (2)$$

Hier ist

$$\sigma_0(\lambda) \cong 3000 \cdot \lambda [\text{Å}]$$

der Absorptionsquerschnitt für unpolarisierte Neutronen, $\lambda$ bezeichnet dabei die Neutronenwellenlänge.

Ein Vorteil von ³He Neutronenspin-Filter bestünde in der Möglichkeit, die Filteropazität an die Wellenlänge der verwendeten Neutronen anzupassen, indem man den Gasdruck in der Zelle auswählt, in die das ³He eingeschlossen ist, und mit dieser Methode die NSF-Leistung für monochromatische Neutronen der gewählten Wellenlänge zu optimieren.

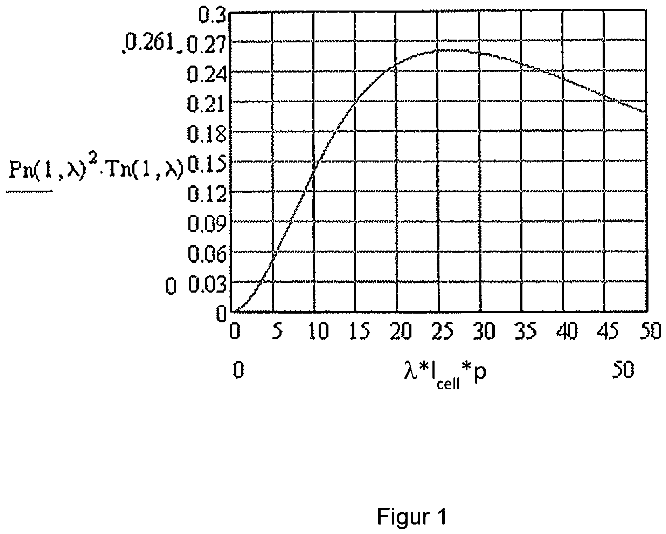

Die Leistung eines Polarisierungsinstruments wird durch seine Effektivität dargestellt, ($Pn^2{}^*T_n$, Fig. 1), woraus wir folgern können, dass die optimalen Bedingungen erreicht sind, wenn das Produkt aus

$$p(\text{bar}) * l_{cell}(\text{cm}) * \lambda(\text{Å}) = 25\text{-}30 \ (\text{bar*cm* Å})$$

beträgt. In diesem Sinne ist der Begriff effektive Polarisation bzw. Analyse zu verstehen.

Figur 1 zeigt diese Abhängigkeit des Effizienzfaktors $(P_n)^2 T_n$ von der Neutronenwellenlänge.

Wie erwähnt sind für Neutronenstreuexperimente an gepulsten Neutronenquellen Messungen über eine große Wellenlängenbandbreite hinweg notwendig, weil der große Vorteil der Flugzeittechnik (engl. Time-of-Flight, TOF) in der Möglichkeit besteht, das Streusignal über einen breiten Bereich der Impulsübertragung $Q \sim \lambda^{-1}$ bei einem festen Instrumentenaufbau zu messen.

Das Verhältnis von maximaler und minimaler Wellenlänge $r = \lambda_{max}/\lambda_{min}$ definiert sich über die gesamte Instrumentenlänge L und die Wiederholungsfrequenz der Quelle $f_{rep}$ mit

$$\Delta \lambda = \frac{m_n h}{f_{rep} L} \qquad (3)$$

und kann in einem recht weiten Bereich unter Annäherung an r = 12 abweichen, wie es beispielsweise für kinetische Messungen an einem Reflektometer mit niedriger Wellenlängenauflösung im Pulse-Skipping Modus an der ESS geplant ist. Ein derartig breites Neutronenwellenlängenband, das in einem einzigen $^3$He Neutronenspin-Filter verwendet bzw. erzeugt werden soll, führt nachteilig zu einem Intensitätsverlust der Polarisationsanalyse für Neutronen mit Wellenlängen, die von einer solchen abweichen, für die die $^3$He Neutronenspin-Filter optimiert wurden (nach Formel (1)).

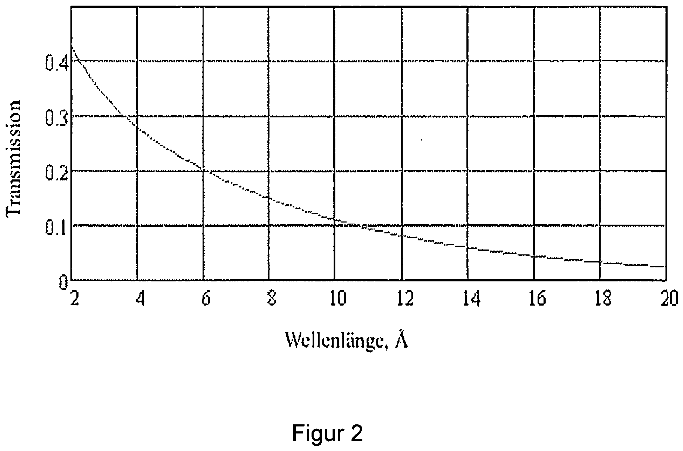

Wie nämlich aus der Figur 2 ersichtlich ist, ändert sich die Transmission um etwa den Faktor 36 für Neutronen im Wellenlängenbereich (2-20) Å für eine Zelle, die für die Wellenlänge von 2Å optimiert ist. Figur 2 zeigt diese Wellenlängenabhängigkeit der Transmission der $^3$He-Zelle, die für die kürzeste Wellenlänge von 2Å optimiert wurde.

Im Rahmen der Erfindung wurde weiterhin erkannt, dass man zur Lösung der Aufgabe der Erfindung, das heißt der effektiven Polarisation und Analyse einen der Zellenparameter in der Formel (1) gemäß der sich verändernden Wellenlänge im gepulsten Strahl variieren muss, um die Opazität der $^3$He Neutronenspin-Filter konstant zu halten.

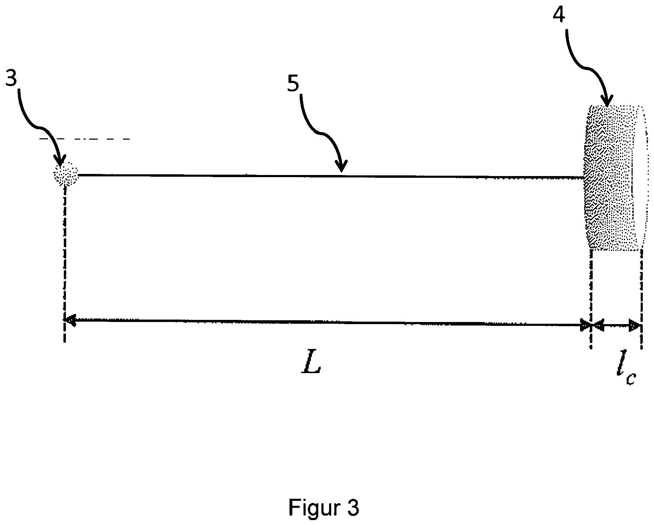

Es wurde erkannt, dass dies möglich ist aufgrund der Tatsache, dass Neutronen verschiedener Wellenlänge, getrennt durch den Abstand L zwischen der Quelle und dem Filter zu verschiedenen Zeitpunkten (siehe Figur 3) die Filterzelle erreichen, wobei $t = L\lambda/hm_n$ mit $m_n$ der Neutronenmasse und $h$ - der Plank'sche Konstanten ist.

Tatsächlich definiert sich die Ankunftszeit der Neutronen mit einer Wellenlänge $\lambda$ aus dem Intervall $[\lambda_{min}, \lambda_{max}]$ wie folgt:

$$\lambda(t) = \lambda_{min} + \frac{L}{hm_n}(t - t_{min}) \qquad (4)$$

Es wurde erkannt, dass die Opazität (Formel (1)) dabei unabhängig ist von $\lambda$, wenn das Produkt aus $P_{He} * l_{cell}$ umgekehrt proportional zu $\lambda(t)$ ist.

Im Rahmen der Erfindung wurde ferner erkannt, dass für die Lösung der Aufgabe der Erfindung vorteilhaft die effektive Zelllänge $l_c$, als der Weg, den der gepulste Neutronenstrahl im $^3$He Neutronenspin-Filter durchtritt, variiert werden muss.

Erfindungsgemäß wird daher eine Anordnung für polarisierte Neutronenstrahlen, umfassend mindestens ein $^3$He Neutronenspin-Filter im Strahlengang eines Neutronenstrahls aus einer Neutronenquelle für gepulste Neutronenstrahlen bereitgestellt. Das $^3$He Neutronenspin-Filter ist zur Variation seiner effektiven Zelllänge ($l_c$ bzw. $l_{cell}$) beweglich angeordnet. Hierdurch allein wird die Aufgabe der Erfindung gelöst.

Dadurch wird vorteilhaft bewirkt, dass die effektive Zelllänge (b, 2b) der aus der Neutronenquelle austretenden Neutronen in dem $^3$He Neutronenspin-Filter variiert werden kann. Hierdurch tritt die vorteilhafte Wirkung auf, dass gepulste Neutronenstrahlen unterschiedlicher Wellenlänge effektiv polarisiert werden und nach der Streuung an einer Probe für die effektive Polarisationsanalyse verwendet werden können. Hiermit wird ferner vorteilhaft bewirkt, dass eine effektive Transmission von etwa 50% erzielt werden kann.

Erfindungsgemäß werden daher Anordnungen mit $^3$He Neutronenspin-Filter bereitgestellt, bei denen die effektive Zelllänge, die der gepulste Neutronenstrahl im Filter durchläuft, schnell variiert werden kann. Diese Maßnahme allein löst vorteilhaft die Aufgabe der Erfindung.

Es wurde erkannt, dass die Veränderung des Gasdrucks als eine Möglichkeit hierzu nicht geeignet ist, da sich dieser den Anforderungen entsprechend nicht schnell genug im $^3$He Neutronenspin-Filter ändern lässt.

Eine erfindungsgemäße Anordnung umfasst daher eine Anordnung zur Erzeugung polarisierter Neutronenstrahlen mit einem $^3$He Neutronenspin-Filter im Strahlengang eines Neutronenstrahls aus einer Neutronenquelle für gepulste Neutronenstrahlen. Das $^3$He Neutronenspin-Filter ist beweglich gelagert, so dass die effektive Zelllänge $l_c$ und

damit der Weg, den die aus der Neutronenquelle austretenden Neutronen und/ oder an der Probe gestreuten Neutronen in dem ³He Neutronenspin-Filter zurücklegen, variiert werden kann. Das ³He Neutronenspin-Filter kann erfindungsgemäß somit im Strahlengang vor der Probe und / oder hinter der Probe angeordnet sein.

In einer Ausgestaltung der Erfindung umfasst das erfindungsgemäß beweglich gelagerte ³He Neutronenspin-Filter zwei prismenartige (Halb-)Zellen mit identischem Gasdruck, die für die Variation der effektiven Zelllänge des Filters im Neutronenstrahl beweglich angeordnet sind. Die Zellen bilden gemeinsam das Filter. Sie sollten vorzugsweise identisch sein.

Die Anordnung kann aber auch eine Lagerung des ³He Neutronenspin-Filters vorsehen, die eine Rotation des ³He Neutronenspin-Filter zur Variation der effektiven Zelllänge ermöglicht. Allerdings ist zu beachten, dass dies nur die Polarisation in einem eher engen Wellenlängenbereich ermöglicht.

Noch vorteilhafter ist es aber möglich, die Anordnung so auszugestalten, dass das ³He Neutronenspin-Filter im Strahlengang zwei vorzugsweise identische, prismenartige Filter mit jeweils identischem Gasdruck umfasst. Die beiden Prismen sind Halbzellen eines ³He Neutronenspin-Filters. Die Prismen werden zueinander z. B. entlang ihrer Hypothenusen oder ihrer Katheten ausgerichtet. Sie werden im Strahlengang zur Variation der effektiven Zelllänge des ³He Neutronenspin-Filter bewegt. Hierdurch wird vorteilhaft bewirkt, dass die effektive Zelllänge b, bzw. 2b variiert werden kann.

Als Tool für die Bewegung des oder der ³He Neutronenspin-Filters dienen z. B. aber nicht ausschließlich luftkissenartige Halterungen. Im Falle, dass zwei prismenartige Halbzellen verwendet werden, werden zwei dieser luftkissenartigen Halterungen, eines für jedes Prisma, notwendig. Andere Antriebe, wie z. B. Laufbänder sind im Rahmen der Erfindung ohne weiteres denkbar bzw. anwendbar.

Wenn das ³He Neutronenspin-Filter rotiert wird, so muss eine Halterung für das ³He Neutronenspin-Filter verwendet werden, die diese Rotation ausführt. Auch hierdurch kann die effektive Zelllänge $I_c$ des ³He Neutronenspin-Filter variiert werden.

Es ist denkbar, mehrere dieser beweglichen ³He Neutronenspin-Filter hintereinander zum Zwecke der effektiven Polarisation und / oder effektiven Analyse vor und / oder hinter der Probe anzuordnen.

Ein oder mehrere ³He Neutronenspin-Filter können somit im Strahlengang zwischen der Neutronenquelle und einer Probe angeordnet sein. Dann wird die Anordnung vorteilhaft zur schnellen Erzeugung effektiv polarisierter Neutronenstrahlen mit unterschiedlicher Wellenlänge verwendet. Dadurch wird vorteilhaft bewirkt, dass polarisierte Neutronen mit verschiedener Wellenlänge in Abhängigkeit von der Bewegung des ³He Neutronenspin-Filters und der damit einhergehenden Variation der effektiven Zelllänge des Filters effektiv polarisiert und im weiteren auch für die effektive Polarisationsanalyse verwendet werden können.

Das ³He Neutronenspin-Filter kann in der Anordnung aber auch im Strahlengang hinter der Probe angeordnet sein. Dann kann diese vorteilhaft als Analysator der Polarisation der gestreuten Neutronenstrahlen verwendet werden.

Das oder die beweglichen ³He Neutronenspin-Filter werden dann auch hinter der Probe, das heißt nach der Streuung des Neutronenstrahls an der Probe im Strahlengang angeordnet sein. Dann wird die erfindungsgemäße Anordnung mit ³He Neutronenspin-Filter als Polarisationsanalysator verwendet. Eine Vielzahl dieser ³He Neutronenspin-Filter kann hierzu in der Anordnung vorgesehen sein.

Besonders vorteilhaft wird demnach mindestens ein für die Variation der effektiven Zelllänge bewegliches ³He Neutronenspin-Filter für die Polarisation von Neutronenstrahlen zwischen der Neutronenstrahlquelle und der Probe angeordnet sein. Zusätzlich kann mindestens ein weiteres für die Variation der Zelllänge bewegliches ³He Neutronenspin-Filter hinter der Probe als Polarisationsanalysator verwendet werden.

Ein erfindungsgemäßes Verfahren, bei dem gepulste polarisierte Neutronenstrahlen auf eine Probe gerichtet und an dieser gestreut werden, ist dadurch gekennzeichnet, dass mindestens ein ³He Neutronenspin-Filter im Strahlengang der Neutronenstrahlen zur Variation der effektiven Zelllänge des Filters bewegt wird.

Die Bewegung sieht z. B. die Rotation des ³He Neutronenspin-Filters um seine vertikale Achse vor. Die vertikale Achse ist diejenige Achse, die senkrecht zum Neutronenstrahl hin ausgerichtet ist.

Das Verfahren sieht in einer Ausgestaltung der Erfindung die Wahl von mindestens einem ³He Neutronenspin-Filter vor, welches zwei prismenartige Zellen umfasst. Die Bewegung des oder der Prismen erfolgt zur Variation der effektiven Zelllänge für die Neutronen im Filter.

Das Filter kann zwischen der Probe und der Quelle für gepulste Neutronenstrahlen angeordnet sein. Besonders bevorzugt wird zur Herstellung effektiv polarisierter Neutronenstrahlen mit unterschiedlicher Wellenlänge das ³He Neutronenspin-Filter zwischen der Probe und der Neutronenstrahlquelle bewegt. Dann ist das Filter zwischen der Probe und der Quelle für gepulste Neutronenstrahlen angeordnet. Der gepulste Neutronenstrahl wird nach seinem Austritt aus der Neutronenquelle in mindestens ein ³He Neutronenspin-Filter geleitet, bei dem vorzugsweise nach jedem Puls aus der Neutronenquelle durch Bewegung der Zelle eine andere effektive Zelllänge für die effektive Polarisation der Neutronen in der Zelle bzw. dem Filter eingestellt und variiert wird. Dann wird das Filter zwischen Quelle und Probe für die Herstellung effektiv polarisierter gepulster Neutronenstrahlen verwendet, bei dem Neutronen mit unterschiedlicher Wellenlänge effektiv polarisiert und hergestellt werden.

Weiterhin besonders bevorzugt ist das Verfahren, bei dem zur effektiven Polarisationsanalyse der an der Probe gestreuten Neutronenstrahlen das $^3$He Neutronenspin-Filter zwischen der Probe und dem Detektor bewegt wird. Dann ist das Filter zwischen der Probe und dem Detektor angeordnet. Bevorzugt werden eine Vielzahl von $^3$He Neutronenspin-Filtern hinter der Probe für gestreute Neutronenstrahlen verwendet, bei dem wiederum vorzugsweise nach jedem Puls aus der Neutronenquelle durch Bewegung der Zelle eine andere effektive Zelllänge für die Neutronen in der Zelle bzw. dem Filter eingestellt und variiert wird.

In einer besonders vorteilhaften Ausgestaltung der Erfindung ist es besonders vorteilhaft auch möglich, mindestens ein bewegliches $^3$He Neutronenspin-Filter zwischen der Neutronenstrahlquelle und der Probe für die effektive Polarisation von Neutronenstrahlen unterschiedlicher Wellenlänge zu nutzen und mindestens ein weiteres, vorzugsweise eine Vielzahl beweglicher $^3$He Neutronenspin-Filter hinter der Probe für die effektive Polarisationsanalyse anzuordnen. Wiederum erfolgt dann die Bewegung jeweils zur Variation der effektiven Zelllänge des Filters.

Beide Prismenpaare, vor und hinter der Probe, sind dann vorteilhaft gleich bzw. haben identische effektive Zelllängen. Sie werden synchron zum Puls der Neutronenquelle zur Variation der effektiven Zelllänge bewegt.

Der Sinn der TOF-Technik ist es nämlich, dass Neutronen mit verschiedenen Wellenlängen unterschiedliche Geschwindigkeiten haben. Die Neutronen werden daher in der Zeit t nach der Ausbreitung durch die Flugbasis L verteilt: $t \sim \lambda$. Aus diesem Grund wird vorteilhaft in der erfindungsgemäßen Anordnung und dem Verfahren die effektive Zelllänge mit der Zeit als $I_{cell} \sim 1 / \lambda$ variiert. Die Bewegung zur Variation der Zelllänge erfolgt daher vorteilhaft synchron zum Puls der Neutronenstrahlquelle.

Die erfindungsgemäße Anordnung und das Verfahren sind daher besonders vorteilhaft Teil eines TOF-Instruments bzw. eines Verfahrens zum Betreiben derselben.

Die Polarisationsanalyse wird besonders vorteilhaft ohne signifikante Intensitätsverluste durchgeführt. Dies ist wichtig, da die unelastische und magnetische Streuung aus einer Probe sehr schwach sind.

Das $^3$He Neutronenspin-Filter ist im Betrieb der Anordnung mit polarisierten $^3$He-Kernen gefüllt. Das $^3$He Neutronenspin-Filter weist hierfür mindestens eine Zuleitung für polarisierte $^3$He-Kerne aus einer Polarisationszelle für $^3$He-Kerne auf. Alternativ wird das $^3$He Neutronenspin-Filter regelmäßig für neue Experimente ausgetauscht, so dass kein polarisiertes $^3$He in das Filter nachgefüllt werden muss.

Wie erwähnt kann die Zelle aus zwei, vorzugsweise identischen Prismen aufgebaut sein. Das Material besteht z. B. aus Glas. Jedes Prisma besteht aus einem rechtwinkligen Dreieck. Die Hypothenusen oder Katheten der beiden Prismen sind zueinander ausgerichtet. Mindestens eines der Prismen ist beweglich gelagert um die effektive Zelllänge b zu variieren. In dem Fall, dass beide Prismen beweglich gelagert sind, werden beiden Prismen zur Variation der effektiven Zelllänge bewegt, so dass vorteilhaft die effektive Zelllänge, die der gepulste Neutronenstrahl durch die Prismen zurückgelegt um den Faktor 2b variiert werden kann.

Das erfindungsgemäße Verfahren sieht entsprechend vor, gepulste Neutronenstrahlen aus einer Spallationsquelle in die Richtung von mindestens einem $^3$He Neutronenspin-Filter zu leiten. Dabei wird je Puls die Wellenlänge des Neutronenstrahls in Abhängigkeit zu mindestens einem sich synchron bewegenden $^3$He Neutronenspin-Filter effektiv polarisiert und / oder analysiert.

Ausführungsbeispiele

Im Weiteren wird die Erfindung an Hand von Ausführungsbeispielen und der beigefügten Figuren näher erläutert, ohne dass es hierdurch zu einer Beschränkung der Erfindung kommen soll.

Es zeigen:

Figur 1    Abhängigkeit des Effizienzfaktors $(P_n)^2 T_n$ von der Neutronenwellenlänge

Figur 2    Wellenlängenabhängigkeit der Transmission der $^3$He-Zelle, die für die kürzeste Wellenlänge von 2Å optimiert ist.

Figur 3    Anordnung des $^3$He Neutronenspin-Filter zur Neutronenstrahlquelle.

Figur 4    Schematische Wiedergabe einer ersten Alternative zur erfindungsgemäßen Anordnung, hier eines nicht-dispersiven $^3$He Neutronenspin-Filters mit zwei sich bewegenden Zellen 1, 2. Die simultane Bewegung der Zellen und die sich zeitlich verändernde Wellenlänge der ankommenden Neutronen hält die Opazität für das gesamte Spektrum auf einem konstanten Niveau.

Figur 5    Die Prismenhöhe als Funktion eines Wellenlängenbereichs für $X_{min} = 0,6$ cm und die Neutronenstrahlhöhe von 2 cm.

Figur 6        Prismenposition als Funktion der Zeit

Figur 7a       Prismengeschwindigkeit als Funktion der Zeit

Figur 7b       Periodische Bewegung der Prismen

Figur 8        Antrieb der Prismen

Die Figur 3 zeigt schematisch die Anordnung des $^3$He Neutronenspin-Filter zur Neutronenquelle.

Es wurde erkannt, dass die festen Parameter dieser $^3$He Neutronenspin-Filter nachteilig einen optimalen Betrieb der $^3$He Neutronenspin-Filter über einen geforderten breiten Wellenlängenbereich faktisch nicht zulassen.

Um dieses Problem zu lösen, muss man erfindungsgemäß einen der Zellenparameter in der Formel 1 gemäß der sich verändernden Wellenlänge im gepulsten Strahl variieren, um die Opazität des $^3$He Neutronenspin-Filter konstant zu halten.

Es wurde erkannt, dass dies möglich ist aufgrund der Tatsache, dass Neutronen verschiedener Wellenlänge, getrennt durch den Abstand L zwischen der Quelle 3 und dem Filter zu verschiedenen Zeitpunkten (siehe Figur 3) die Filterzelle erreichen, wobei $t = L\lambda/hm_n$ mit $m_n$ der Neutronenmasse und $h$ - der Plank'sche Konstanten ist.

Tatsächlich definiert sich die Ankunftszeit der Neutronen mit einer Wellenlänge $\lambda$ aus dem Intervall $[\lambda_{min}, \lambda_{max}]$ wie folgt:

$$\lambda(t) = \lambda_{min} + \frac{L}{hm_n}(t - t_{min}) \qquad (4)$$

Es wurde erkannt, dass die Opazität (Formel (1)) unabhängig ist von $\lambda$, wenn das Produkt aus $P_{He}*l_{cell}$ umgekehrt proportional zu $\lambda(t)$ ist.

Das charakteristische Zeitintervall für das Ankommen der Neutronen mit

$$\lambda \in [\lambda_{min}, \lambda_{max}]$$

 entspricht in etwa der Zeitdauer der Neutronenpulse an der Quelle und liegt bei wenigen 10 Millisekunden. Dieses Zeitintervall ist vorteilhaft nutzbar für eine Änderung der effektiven Zelllänge.

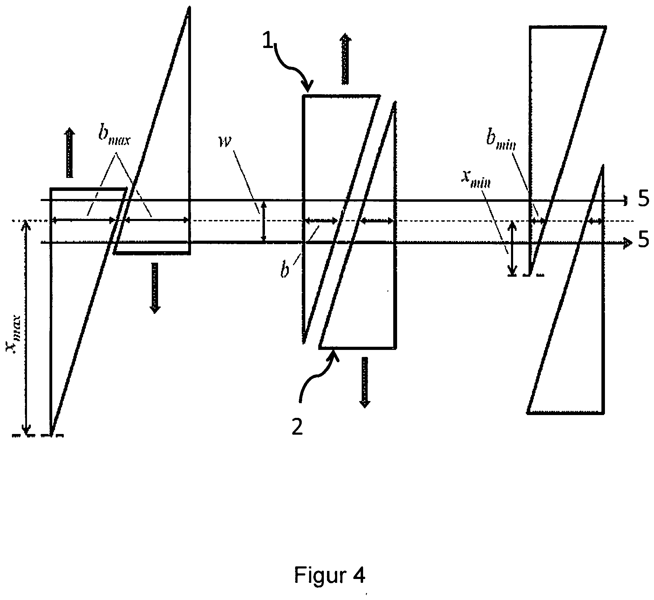

Die Variation der effektiven Zelllänge b, bzw. 2b besteht darin, dass $^3$He Neutronenspin-Filter bzw. Zellen eingesetzt werden, die im Ausführungsbeispiel aus zwei identischen, dreieckigen, prismenartigen $^3$He-Kammern 1, 2 bestehen, welche mit demselben Gasdruck p gefüllt sind, und die zur Variation der effektiven Zelllänge b, 2b in gegensätzlichen Richtungen bewegt werden, wie dies in der Figur 4 schematisch gezeigt ist.

Die Gesamtlänge 2b der $^3$He-Zellen 1, 2, welche im Neutronenstrahl 5 platziert und bewegt werden, hängt damit linear von der Lageveränderung x der Prismen in Relation zum Neutronenstrahl ab. Dabei bleibt

$$2b(x) = 2x\tan(\beta) \qquad (9)$$

jedoch konstant im Querschnittsbereich w des Neutronenstrahls für jedes beliebige x (hier ist ß der Öffnungswinkel eines Prismas).

Wenn die relative Bewegung der Prismen mit einer Geschwindigkeit v abläuft, mit $x(t)=vt$, so wird die effektive Zellenlänge 2b eine Zeitfunktion, und wenn, ähnlich dem oben erläuterten Sachverhalt, $b_{eff}(t) \sim x(t) \sim 1/\lambda(t)$, so wird die Opazität einer solchen erfindungsgemäßen Anordnung für alle Wellenlängen besonders vorteilhaft konstant sein.

Der maximale, für diese Änderung verfügbare Bereich $[X_{min}, X_{max}]$, legt den Wellenlängenbereich $[\lambda_{min}, \lambda_{max}]$ fest, der mit einem solchen Aufbau mit $X_{max}/X_{min} = r$ bedient werden kann. Die Größe jedes Prismas in dem Doppelprismenaufbau bestimmt sich über den benötigten Wert von r und $X_{min}$, der vom Referenzwert bestimmt wird (1). Zum Beispiel beträgt für r=5 der optimale Wert $X_{min}$ für jedes der Prismen 0,625cm (p=2bar) und die Prismenhöhe liegt bei 15 cm.

Das nicht-dispersive $^3$He Neutronenspin-Filter mit zwei sich bewegenden Zellen 1, 2 ist der Figur 4 zu entnehmen. Die simultane Bewegung der Zellen und die sich zeitlich verändernde Wellenlänge der ankommenden Neutronen hält die Opazität für das gesamte Spektrum auf einem konstanten Niveau.

Die benötigten Parameter der Prismen erhält man aus geometrischen Betrachtungen zu Figur 4

$$x_{min} \cot(\beta) - \frac{s}{2} \geq x_0 \qquad\qquad (10)$$

wobei Xo den Ausgleich darstellt zwischen dem Scheitel des Prismas und dem unteren Rand des Neutronenstrahls, der aus technologischen Gründen erforderlich ist. Der Scheitelabschnitt des Prismas sollte abgerundet sein. Nunmehr definieren $X_{min}$ und s den Minimalwert von ß, so dass die minimale Prismenhöhe beschrieben werden kann als

$$H \geq r \cdot x_{min} \cot(\beta) + \frac{s}{2} + x_0 = (r+1)\left(\frac{s}{2} + x_0\right) \qquad\qquad (11)$$

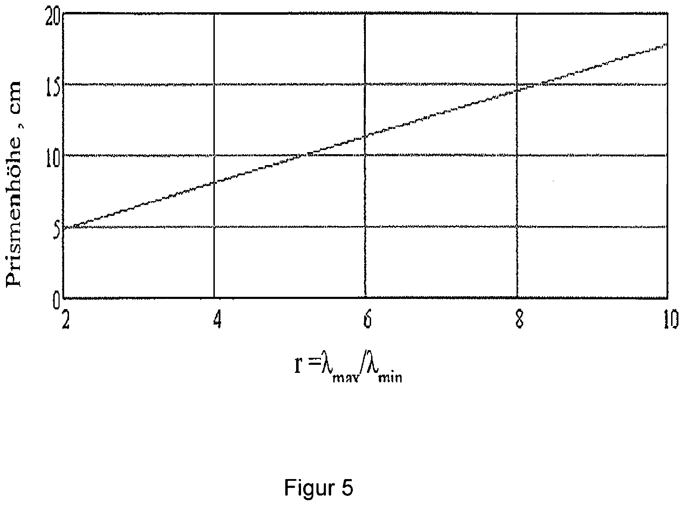

Beispielhaft wird die Prismenhöhe als Funktion des Wellenlängenbereichs für $X_{min}$ = 0,6 cm und die Neutronenstrahlhöhe von 2 cm in der Figur 5 dargestellt. Diese Größe liegt im Rahmen der technologischen Möglichkeiten. Dies bedeutet, dass es keine technischen Probleme gibt, die Glaselemente mit einer solchen Form und Größe herzustellen, denn derzeit werden noch viel kompliziertere $^3$He-Glaszellen routinemäßig gemacht, wie der Literatur zu entnehmen ist.

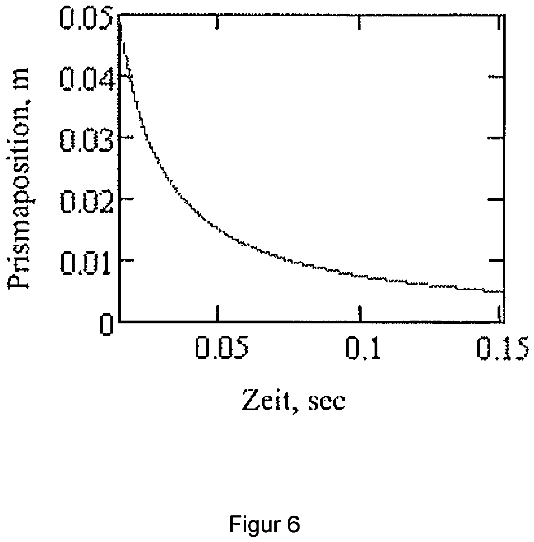

Derartige Anordnungen eines Doppelprismenaufbaus als $^3$He Neutronenspin-Filter können aber auch als Reflektometer innerhalb der europäischen Spallationsquelle (ESS) berücksichtigt werden. In diesem Fall ist der Wellenlängenbereich von 2 bis 18 Å, und die Position jedes Prismas kann im Bereich von 0,56 bis 5 cm verändert werden (Figur 6).

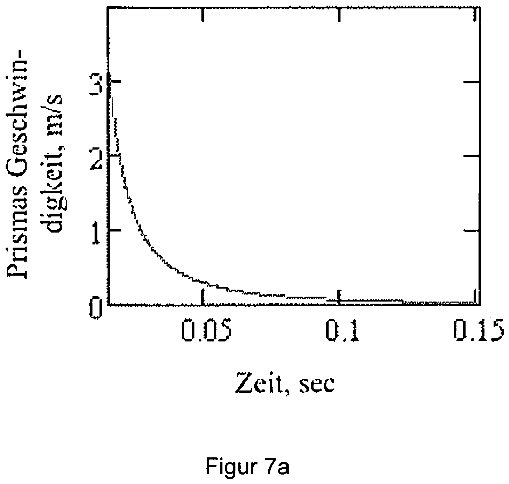

Die Geschwindigkeit der Prismen ist für die Variation der effektiven Zelllänge zeitabhängig und wird von 3,3 m/s bis 0,041 m/s geändert (Figur 7a). Die Änderung der Position der Prismen und der Prismengeschwindigkeit erfolgt in der Zeit, die durch das Zeitintervall zwischen zwei verwendeten Pulsen definiert ist.

Die Prismenpositionen im Neutronenstrahl soll umgekehrt proportional zu der Zeit der Ankunft von Neutronen am $^3$He Neutronenspin-Filter eingestellt werden, so dass die Filteropazität (Gleichung 2) konstant ist. Die Berechnungen der Position der Prismen x (t) für $\lambda_{min}$=2Å und L=30m sind in Figur 6 dargestellt. Man kann sehen, dass die Position jedes Prismas im Bereich von 0,56 bis 5 cm verändert werden.

Um eine zeitvariable Positionierung des Prismas zu erreichen, ist es mit der zeitabhängigen Geschwindigkeit v (t) zu bewegen. Berechnungen der Prismengeschwindigkeit v (t) für die gleichen Parameter wie in Figur. 6 (für $\lambda_{min}$=2Å, L=30m) werden in der Figur 7a vorgestellt. Es wird deutlich, dass die Geschwindigkeit der Prismen sich von 3,3 m/s bis 0,041 m/s ändert.

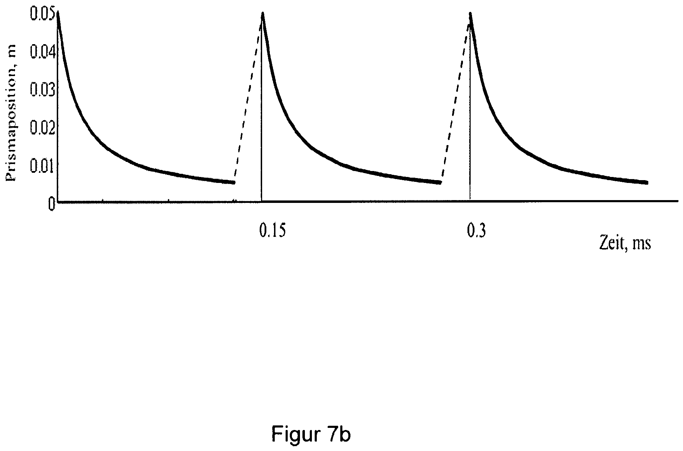

Da der Neutronenpuls periodisch mit der Periode von 0,15 ms erzeugt wird, ist auch die Prismenbewegung hierzu periodisch, wie in der Figur 7b gezeigt. Die Figur 7b zeigt diese periodische Bewegung der Prismen, die mit der Zeitstruktur und einer Periode von 0,15 ms des gepulsten Strahls synchronisiert wird. Dies entspricht dem Impulssprungmodus bei der ESS. Die gestrichelten Linien zeigen die Rückbewegung der Prismen an.

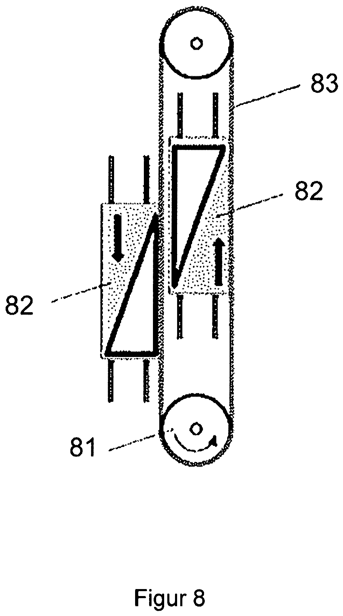

Ein Antrieb der Prismen als $^3$He Neutronenspin-Filter unabhängig von seiner jeweiligen Lage vor und / der hinter der Probe lässt sich z. B. wie folgt realisieren (Figur 8).

Für den Motorrotor mit Antrieb 81 mit einem Durchmesser von 10 cm ist die maximale Geschwindigkeit (3,3 m/s) des Bandes 83, die die Translationseinheit 82 antreibt, bei einer Drehfrequenz von 10 Hz erreicht. Um die Bandgeschwindigkeit von 3,3 m/s bis 0,041 m/s (Figur 7a) variieren zu können, muss die Drehfrequenz des Motors von 10 Hz auf 0,11 Hz in steuerbarer Weise verändert werden können. Hierfür wird z. B. ein Schrittmotor genutzt.

## Patentansprüche

**1.**   Anordnung für polarisierte Neutronenstrahlen, umfassend mindestens ein $^3$He Neutronenspin-Filter (4) im Strahlengang eines Neutronenstrahls aus einer Neutronenquelle (3) für gepulste Neutronenstrahlen (5),
**dadurch gekennzeichnet, dass**
das $^3$He Neutronenspin-Filter zur Variation seiner effektiven Zelllänge ($I_{cell}$, $I_c$) beweglich angeordnet ist.

**2.**   Anordnung nach Anspruch 1,
**dadurch gekennzeichnet, dass**
das $^3$He Neutronenspin-Filter zwei prismenartige Zellen (1, 2) mit identischem Gasdruck umfasst, die für die Variation der effektiven Zelllänge (b, 2b) des Filters beweglich angeordnet sind.

**3.** Anordnung nach einem der vorhergehenden Ansprüche,
**dadurch gekennzeichnet, dass**
das $^3$He Neutronenspin-Filter im Strahlengang zwischen der Neutronenstrahlquelle und einer Probe angeordnet ist und zur Herstellung effektiv polarisierter Neutronen mit unterschiedlicher Wellenlänge verwendet werden kann.

**4.** Anordnung nach einem der vorhergehenden Ansprüche,
**dadurch gekennzeichnet, dass**
das $^3$He Neutronenspin-Filter im Strahlengang hinter einer Probe angeordnet ist, und als Analysator der Polarisation der gestreuten Neutronenstrahlen verwendet werden kann.

**5.** Verfahren zur Polarisationsanalyse, bei dem gepulste polarisierte Neutronenstrahlen auf eine Probe gerichtet und an dieser gestreut werden,
**dadurch gekennzeichnet, dass**
mindestens ein $^3$He Neutronenspin-Filter im Strahlengang der Neutronenstrahlen zur Variation der effektiven Zelllänge (b, 2b) des Filters bewegt wird.

**6.** Verfahren nach vorherigem Anspruch,
bei dem
zur Herstellung effektiv polarisierter Neutronenstrahlen mit unterschiedlicher Wellenlänge das $^3$He Neutronenspin-Filter (4) zwischen der Probe und der Neutronenstrahlquelle bewegt wird.

**7.** Verfahren nach einem der beiden vorherigen Ansprüche,
bei dem
zur effektiven Polarisationsanalyse der an der Probe gestreuten Neutronenstrahlen das $^3$He Neutronenspin-Filter zwischen der Probe und dem Detektor bewegt wird.

**8.** Verfahren nach einem der vorhergehenden drei Ansprüche,
**gekennzeichnet durch**
Wahl von mindestens einem $^3$He Neutronenspin-Filter, welches zwei prismenartige Zellen (1, 2) mit identischem Gasdruck umfasst, die zur Variation der effektiven Zelllänge (b, 2b) bewegt werden.

**Claims**

**1.** Arrangement for polarized neutron beams, comprising at least one $^3$He neutron spin filter (4) in the beam path of a neutron beam from a neutron source (3) for pulsed neutron beams (5),
**characterized in that**
the $^3$He neutron spin filter is movably arranged for varying its effective cell length ($I_{cell}$, $I_c$).

**2.** Arrangement according to claim 1,
**characterized in that**
the $^3$He neutron spin filter comprises two prism-like cells (1, 2) having identical gas pressure, which are movably arranged for varying the effective cell length (b, 2b) of the filter.

**3.** Arrangement according to one of the preceding claims,
**characterized in that**
the $^3$He neutron spin filter is arranged in the beam path between the neutron beam source and a sample, and can be used for producing effectively-polarized neutrons having different wavelengths.

**4.** Arrangement according to one of the preceding claims,
**characterized in that**
the $^3$He neutron spin filter is arranged in the beam path behind a sample and can be used as an analyzer of the polarization of the scattered neutron beams.

**5.** Method for polarization analysis, in which pulsed, polarized neutron beams are directed onto a sample and scattered thereon,
**characterized in that**
at least one $^3$He neutron spin filter is moved in the beam path of the neutron beams in order to vary the effective cell length (b, 2b) of the filter.

6. Method according to the preceding claim,
   in which
   the $^3$He neutron spin filter (4) is moved between the sample and the neutron beam source in order to produce effectively-polarized neutron beams having different wavelengths.

7. Method according to one of the two preceding claims,
   in which
   the $^3$He neutron spin filter is moved between the sample and the detector in order to effectively analyze the polarization of the neutron beams scattered on the sample.

8. Method according to one of the previous three claims,
   **characterized by**
   selecting at least one $^3$He neutron spin filter comprising two prism-like cells (1, 2) having identical gas pressure, which are moved in order to vary the effective cell length (b, 2b).

**Revendications**

1. Agencement pour des faisceaux de neutrons polarisés, comprenant au moins un filtre (4) de spin de neutron de $^3$He dans le trajet d'un faisceau de neutrons à partir d'une source (3) de neutrons pour des faisceaux (5) de neutrons puisés,
   **caractérisé en ce que** le filtre de spin de neutron de $^3$He est monté mobile pour la variation de sa longueur ($I_{cell}$, $I_c$) de cellule efficace.

2. Agencement suivant la revendication 1,
   **caractérisé en ce que** le filtre de spin de neutrons de $^3$He comprend deux cellules (1, 2) de type en prisme ayant une même pression de gaz, qui sont montées mobiles pour la variation de la longueur (b, 2b) de cellule efficace de filtre.

3. Agencement suivant l'une des revendications précédentes,
   **caractérisé en ce que** le filtre de spin de neutrons de $^3$He est monté dans le trajet du faisceau entre la source du faisceau de neutrons et un échantillon et peut être utilisé pour la production de neutrons polarisés de manière efficace de longueurs d'onde différentes.

4. Agence suivant l'une des revendications précédentes,
   **caractérisé en ce que** le filtre de spin de neutrons de $^3$He est monté dans le trajet du faisceau derrière un échantillon et peut être utilisé comme analyseur de la polarisation des faisceaux de neutrons dispersés.

5. Procédé d'analyse de la polarisation, dans lequel on dirige des faisceaux de neutrons polarisés de manière pulsée sur un échantillon et on les y disperse,
   **caractérisé en ce que** l'on déplace au moins un filtre de spin de neutron de $^3$He dans le trajet des faisceaux de neutrons pour la variation de la longueur (b, 2b) de cellule efficace du filtre.

6. Procédé suivant la revendication précédente,
   dans lequel
   pour la production de faisceaux de neutrons polarisés de manière efficace de longueurs d'onde différentes, on déplace le filtre (4) de spin de neutron de $^3$He entre l'échantillon et la source de faisceau de neutrons.

7. Procédé suivant l'une des deux revendications précédentes,
   dans lequel
   pour l'analyse efficace de la polarisation des faisceaux de neutrons dispersés sur l'échantillon, on déplace le filtre de spin de neutron de $^3$He entre l'échantillon et le détecteur.

8. Procédé suivant l'une des trois revendications précédentes,
   **caractérisé par**
   le choix d'au moins un filtre de spin de neutron de $^3$He, qui comprend deux cellules (1, 2) de type en prisme ayant une même pression de gaz, que l'on déplace pour la variation de la longueur (b, 2b) de cellule efficace.

Figur 1

Figur 2

4

3

5

$L$

$l_c$

Figur 3

Figur 4

$$r = \lambda_{max}/\lambda_{min}$$

Figur 5

Figur 6

Figur 7a

Figur 7b

Figur 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006024584
- EP 2180484 A
- US 2005157831 A
- DE 19936898